# EUROPEAN PATENT APPLICATION

(11) **EP 2 975 221 A1**
(43) Date of publication of application: **20.01.2016**
(21) Application number: 15175374.6
(22) Date of filing: 06.07.2015
(51) Int. Cl.: F01D 9/04, F04D 29/54

(54) **VANE ASSEMBLY**

(30) Priority: 17.07.2014 US 201462025754 P
(71) Applicant: Rolls-Royce Corporation, Indianapolis, Indiana 46225 (US)
(72) Inventor: Becker, Jeffrey M., Indianapolis, IN Indiana 46202 (US); Margetts, Michael C., Brownsburg, IN Indiana 46112 (US); Hodgson, Benedict N., Indianapolis, IN Indiana 46220 (US); McAdams, Danny E., Mooresville, IN Indiana 46158 (US); Johnson, Rebecca M., Brownsburg, IN Indiana 46112 (US)
(74) Representative: Gille Hrabal

(57) **Abstract**

A compressor for a gas turbine engine includes a plurality of rotating wheel assemblies, a plurality of static vane assemblies, and a case extending around the rotating wheel assemblies and static vane assemblies. The static vane assemblies include an inner band (12), an outer band (14), and a plurality of vanes (16) extending between the inner and outer bands.

## Description

### FIELD OF THE DISCLOSURE

The present disclosure relates generally to gas turbine engines, and more specifically to vane assemblies for gas turbine engines.

### BACKGROUND

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and the fuel-air mixture is ignited. Products of the combustion reaction in the combustor are directed into the turbine where work is extracted to drive the compressor and, sometimes, an output shaft. Leftover products of the combustion are exhausted out of the turbine and may provide thrust in some applications.

Some compressors include alternating stages of rotating wheel assemblies and static vane assemblies. The rotating wheel assemblies include a plurality of blades that push air axially toward an aft end of the engine. As the air moves axially, the space available to the air is reduced causing the air to compress. The rotating wheel assemblies also cause the air to move radially, or swirl, about a central axis of the engine as the air is pushed toward the aft end. Static vane assemblies are arranged between the rotating wheel assemblies to re-direct the radially moving, or swirling, component of the air to the axial direction.

### SUMMARY

The present disclosure may comprise one or more of the following features and combinations thereof.

A vane ring segment may include an inner band, an outer band, and a plurality of vanes. The inner band may extend around a portion of a central axis. The inner band may include a radially-inner surface facing toward the central axis, a radially-outer surface facing away from the central axis, and a plurality of inner-band vane apertures extending through the radially-inner and radially-outer surfaces of the inner band. The outer band may extend around a portion of a central axis and may be radially spaced apart from the inner band. The outer band may include a radially-inner surface facing toward the central axis, a radially-outer surface facing away from the central axis, and a plurality of outer-band vane apertures extending through the radially-inner and radially-outer surfaces of the outer band. The plurality of vanes may be coupled to the inner and outer bands. Each vane may extend radially outward through one of the plurality of outer-band vane apertures beyond the radially-outer surface of the outer band. Each vane may be bonded to the outer band by a first layer of braze.

In some embodiments, each vane may include a body portion and an outer attachment portion. The body portion may extend from the radially-outer surface of the inner band to the radially-inner surface of the outer band. The outer attachment portion may extend radially outward from the body portion through one of the plurality of outer-band vane apertures beyond the radially-outer surface of the outer band. The first layer of braze may be located between the outer attachment portion and the outer band.

In some embodiments, a radial cross-section of the outer attachment portion of each vane may have an airfoil shape similar to a radial cross-section of the body portion of the same vane close to the outer band. In some embodiments, each vane may extend radially inward through one of the plurality of inner-band vane apertures so that it is about flush with the radially-inner surface of the inner band. Each vane may be bonded to the inner band by a second layer of braze.

In some embodiments, each vane may include a body portion and an inner attachment portion. The body portion may extend from the radially-outer surface of the inner band to the radially-inner surface of the outer band. The inner attachment portion may extend radially inward from the body portion through one of the plurality of inner-band vane apertures so that it is about flush with the radially-inner surface of the inner band. The second layer of braze may be located between the inner attachment portion and the inner band. In some embodiments, a radial cross-section of the inner attachment portion of each vane may have an airfoil shape similar to a radial cross-section of the body portion of the same vane close to the inner band.

In some embodiments, each outer-band vane aperture may be defined by a side wall that extends between the radially-inner and the radially-outer surfaces of the outer band. Each outer-band vane aperture may be sized to receive the outer attachment portion of one of the plurality of vanes to form a gap therebetween all the way around the vane. The first layer of braze may be located in the gap between the side wall and the vane all the way around the vane.

In some embodiments, each side wall may be substantially parallel to an outer surface of a vane received in an outer-band vane aperture defined by the side wall. In some embodiments, the gaps may be between about 3 thousandths of an inch and about 25 thousandths of an inch thick.

In some embodiments, the inner band may be made from a metallic material. The outer band may be made from a metallic material. Each of the plurality of vanes may be made from a metallic material.

According to another aspect of the present disclosure, a vane ring assembly may include a plurality of vane ring segments extending circumferentially 360 degrees around a central axis of the gas turbine engine. Each vane ring segment may include an inner band, an outer band, and a plurality of vanes.

Each inner band may be arranged around a portion of the central axis. The inner bands each may include a radially-inner surface facing toward the central axis, a radially-outer surface facing away from the central axis, and a plurality of inner-band vane apertures extending through the radially-inner and radially-outer surfaces of one of the inner bands.

Each outer band may be arranged around a portion of the central axis. The outer bands each may include a radially-inner surface facing toward the central axis, a radially-outer surface facing away from the central axis, and a plurality of outer-band vane apertures extending through the radially-inner and radially-outer surfaces of one of the outer bands.

The plurality of vanes each may be coupled to one of the inner bands and one of the outer bands. Each vane may include a body portion and an outer attachment portion. The body portion may extend from the radially-outer surface of an inner band to a radially-inner surface of an outer band. The outer attachment portion may extend radially outward from the body portion through one of the plurality of outer-band vane apertures beyond the radially-outer surface of the outer band. Each outer platform may be bonded to the outer band by a first layer of braze.

In some embodiments, each of the plurality of vane ring segments may extend circumferentially 45 degrees around the central axis. In some embodiments, a radial cross-section of the outer attachment portion of each vane may have an airfoil shape similar to a radial cross-section of the body portion of the same vane close to the outer band.

In some embodiments, each vane may include an inner attachment portion that extends radially inward from the body portion through one of the plurality of inner-band vane apertures so that it is about flush with the radially-inner surface of the inner band. A second layer of braze may be located between the inner attachment portion and the inner band. In some embodiments, a radial cross-section of the inner attachment portion of each vane may have an airfoil shape similar to a radial cross-section of the body portion of the same vane close to the inner band.

In some embodiments, the first layer of braze may be between about 3 thousandths of an inch and about 25 thousandths of an inch thick between the outer attachment portion and the outer band. The second layer of braze may be between about 3 thousandths of an inch and about 25 thousandths of an inch thick between the inner attachment portion and the inner band.

According to another aspect of the present disclosure, a method of assembling a vane ring segment may include a number of steps. The method may include providing an inner band, an outer band, and a plurality of vanes. The inner band may extend around a portion of a central axis. The inner band may include a radially-inner surface facing toward the central axis, a radially-outer surface facing away from the central axis, an outer band that extends around a portion of a central axis and that is radially spaced apart from the inner band. The outer band may include a radially-inner surface facing toward the central axis and a radially-outer surface facing away from the central axis.

The method may further include forming a plurality of inner-band vane apertures in the inner band and a plurality of outer-band vane apertures in the outer band. The inner-band vane apertures may extend through the radially-inner and radially-outer surfaces of the inner band. The plurality of outer-band vane apertures may extend through the radially-inner and radially-outer surfaces of the outer band. The method may further include coupling each of the plurality of vanes to the inner band and the outer band such that each vane extends radially outward through one of the plurality of outer-band vane apertures beyond the radially-outer surface of the outer band.

In some embodiments, each outer-band vane aperture may be defined by a side wall that extends between the radially-inner and the radially-outer surfaces of the outer band. Each side wall may be substantially parallel to an outer surface of a vane received in an outer-band vane aperture defined by the side wall.

In some embodiments, coupling each of the plurality of vanes to the inner band and the outer band may include bonding each vane to the outer band by a first layer of braze. In some embodiments, coupling each of the plurality of vanes to the inner band and the outer band may further include tack welding each vane to the outer band before bonding each vane to the outer band by a first layer of braze.

These and other features of the present disclosure will become more apparent from the following description of the illustrative embodiments.

### BRIEF DESCRIPTION OF THE DRAWINGS

Fig. 1 is a cutaway view of a gas turbine engine including a compressor for providing compressed air to a combustor included in the engine and showing that the compressor includes a plurality of rotating wheel assemblies and a plurality of static vane ring assemblies arranged between the rotating wheel assemblies;
Fig. 2 is a perspective view of a portion of one static vane ring assembly included in the compressor of Fig. 1 showing that the vane ring assembly includes an outer band, an inner band, and a plurality of vanes extending radially through the inner and outer bands;
Fig. 3 is an exploded perspective view of a vane ring assembly included in Fig. 2 showing, from left to right, the inner band, the plurality of vanes, and the outer band and suggesting that each vane extends through vane receiving apertures formed in the inner and outer bands;
Fig. 4 is a sectional view of the vane ring assembly of Fig. 2 taken at line 4-4 showing that each vane includes a body portion extending between the inner and outer bands, an outer attachment portion that is coupled to the outer band by a layer of braze, and an inner attachment portion that is coupled to the inner band by a layer of braze;
Fig. 5 is a view similar to Fig. 4 showing that the outer attachment portion of each vane extends through the vane receiving aperture formed in the outer band and that the layer of braze is located in a gap formed between each vane and the outer band;
Fig. 6 is a top plan view of the vane ring assembly of Fig. 4 showing that the gap is formed between the vane and the outer band all the way around the vane and that the layer of braze is located in the gap to couple the vane to the outer band;
Fig. 7 is a sectional view taken along line 7-7 of Fig. 4 showing a radial cross-section of the body portion of the vane close to the outer band;
Fig. 8 is a sectional view taken along line 8-8 of Fig. 4 showing a radial cross-section of the outer attachment portion of the vane received in the outer band which is similar to the radial cross-section of the body portion shown in Fig. 7;
Fig. 9 is a sectional view taken along line 9-9 of Fig. 4 showing a radial cross-section of the body portion of the vane close to the inner band; and
Fig. 10 is a sectional view taken along line 10-10 of Fig. 4 showing a radial cross-section of the inner attachment portion of the vane received in the inner band which is similar to the radial cross-section of the body portion shown in Fig. 9.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

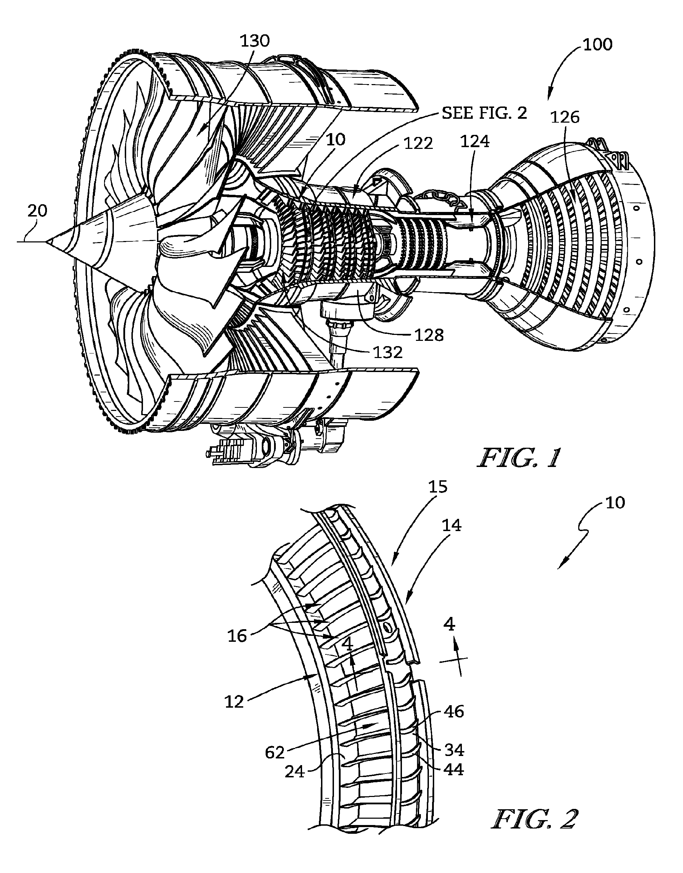

An illustrative gas turbine engine 100 used in aircraft includes a compressor 122 to provide compressed air to a combustor 124 as part of a power generation process of the engine 100 as suggested in Fig. 1. The illustrative compressor 122 includes a compressor case 128, rotating wheel assemblies 132, and static vane ring assemblies 10, sometimes called vane assemblies, as shown in Fig. 1. The vane ring assemblies 10 and rotating wheel assemblies 132 extend across a flow path to compress and direct air toward the combustor 124. The rotating wheel assemblies 132 compress the air as the air is moved toward the combustor 124. The static vane ring assemblies 10 change the direction of the air exiting a first rotating wheel assembly located upstream of the vane ring assembly 10 before the air enters a second rotating wheel assembly 132 located directly downstream of the vane ring assembly 10 as shown in Fig. 1.

The compressor case 128 extends around the rotating wheel assemblies 132 and static vane ring assemblies 10 to provide the flow path through the compressor 122 and into the combustor 124 as shown in Fig. 1. The compressed air from the compressor 122 is mixed with fuel in the combustor 124 and the fuel-air mixture is ignited to produce hot high pressure products that are directed into a turbine 126. The turbine 126 extracts work from the hot high pressure products to drive the compressor 122 and a fan assembly 130 that provides thrust for the aircraft.

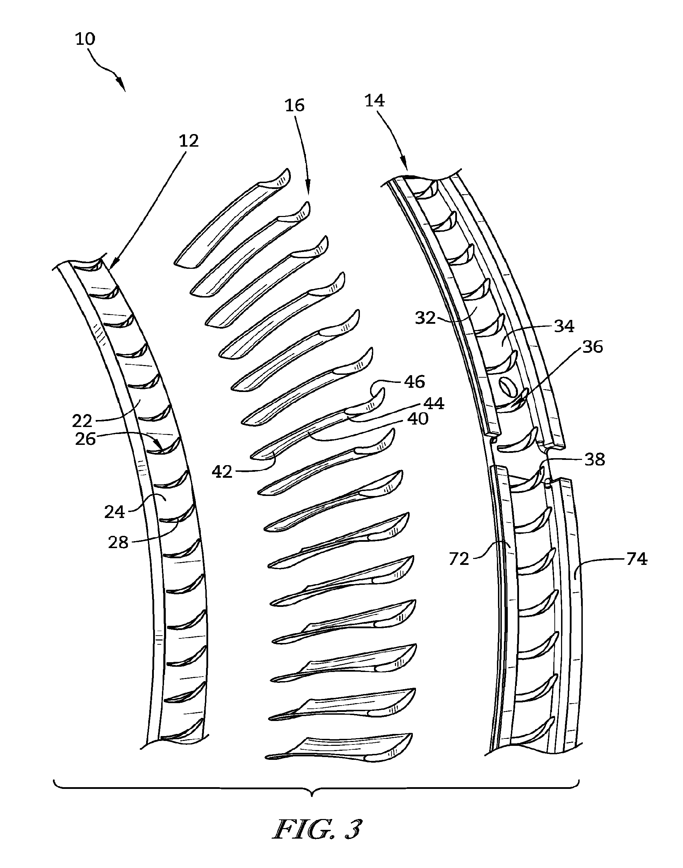

The vane ring assemblies 10 illustratively include segments 15 that are arranged to extend around a central axis 20 of the engine 100 as shown in Fig. 1. In the illustrative embodiment, each vane ring segment 15 includes an inner band 12, an outer band 14, and a plurality of vanes 16 as shown in Fig. 3. The inner band 12 is formed to define inner-band vane apertures 26 extending through the inner band 12. The outer band 14 is formed to define outer-band vane apertures 36 extending through the outer band 14. Each vane 16 extends through a corresponding inner-band vane aperture 26 and outer-band vane aperture 36.

In the illustrative embodiment, each vane 16 extends radially outward through one of the plurality of outer-band vane apertures 36. Each vane 16 also extends radially inward through one of the plurality of inner-band vane apertures 26. Each vane 16 is bonded to the outer band 14 by a first layer of braze 48 and to the inner band 12 by a second layer of braze 58.

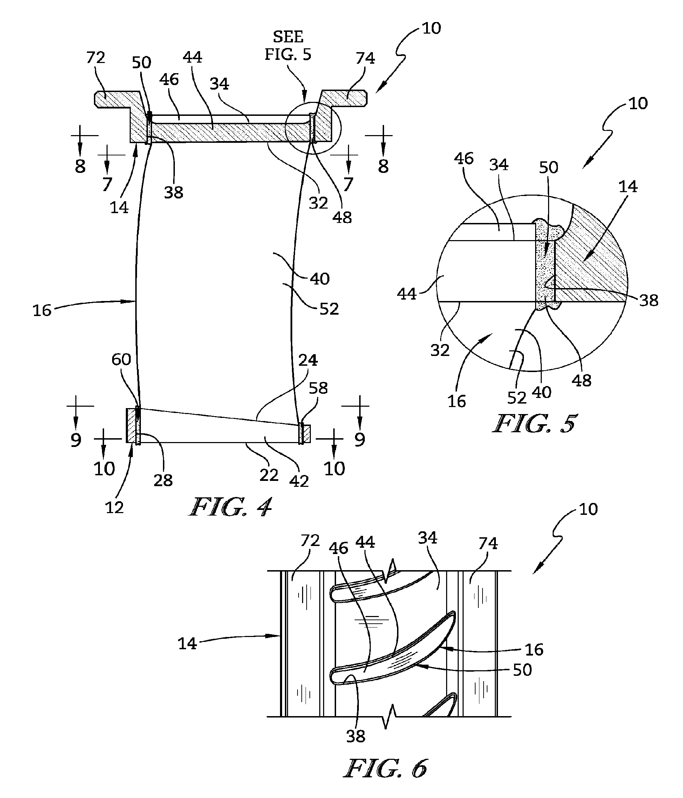

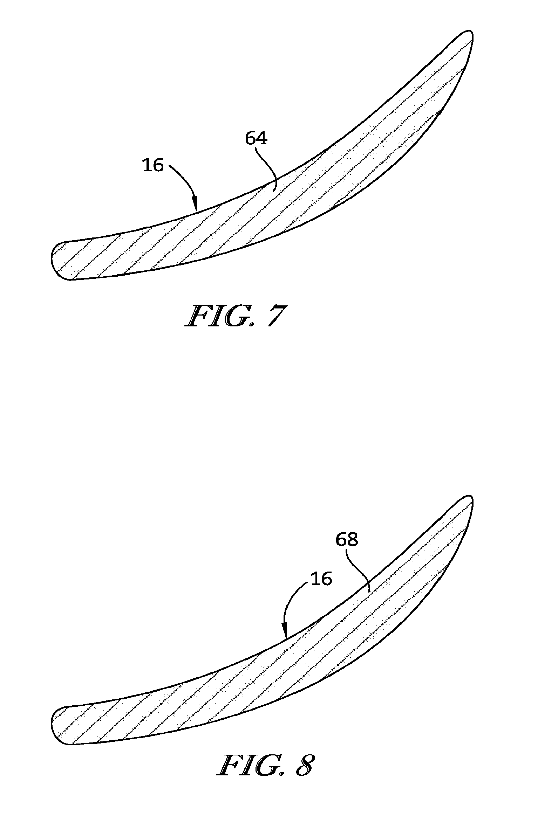

Each vane 16 has a body portion 40, an outer attachment portion 44, and an inner attachment portion 42 as shown in Fig. 4. The body portion 40 has a first radial cross-section 64 located close to the outer band 14 as shown in Fig. 7. The outer attachment portion 44 defines a third radial cross-section 68 located close to the outer band 14 as shown in Fig. 8. The first radial cross-section 64 of the body portion 40 of each vane 16 has an airfoil shape similar to the third radial cross-section 68 of the outer attachment portion 44 of the same vane 16.

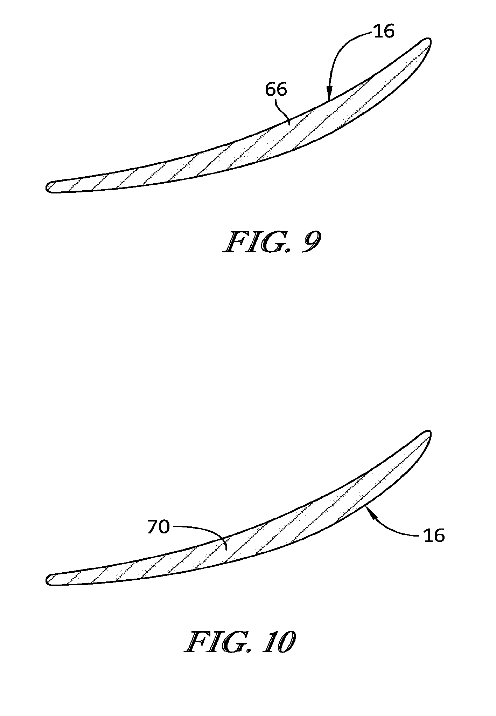

The body portion 40 has a second radial cross-section 66 located close to the inner band 12 as shown in Fig. 9. The inner attachment portion 42 defines a fourth radial cross-section 70 located close to the inner band 12 as shown in Fig. 10. The second radial cross-section 66 of the body portion 40 of each vane has an airfoil shape similar to the fourth radial cross-section 70 of the inner attachment portion 42 of the same vane 16.

Each outer-band vane aperture 36 is sized to receive the outer attachment portion 44 of one of the plurality of vanes 16 to form a first gap 50 therebetween all the way around the vane 16 as shown in Figs. 4 and 6. The first layer of braze 48 is located in the first gap 50 between the outer band 14 and the vane 16 all the way around the vane 16 as shown in Fig. 6.

Each inner-band vane aperture 26 is sized to receive the inner attachment portion 42 of one of the plurality of vanes 16 to form a second gap 60 therebetween all the way around the vane 16 as shown in Fig. 4. The second layer of braze 58 is located in the second gap 60 between the outer band 14 and the vane 16 all the way around the vane 16 as shown in Fig. 10.

The inner and outer bands 12, 14 cooperate to position the vanes 16 in the flow path of the compressor 122 as shown in Fig. 1. The vanes 16 extend between the inner and outer bands 12, 14 to direct the air moving through the compressor 122 toward the combustor 124 as shown in Fig. 2.

The inner band 12 extends around a portion of the central axis 20 of the engine 100 as shown in Fig. 1. The inner band 12 includes a radially-inner surface 22, a radially-outer surface 24, and the plurality of inner-band vane apertures 26 as shown in Figs. 3 and 4. The radially-inner surface 22 faces toward the central axis 20. The radially-outer surface 24 faces away from the central axis 20. The plurality of inner-band vane apertures 26 extends through the radially-inner and radially-outer surfaces 22, 24 of the inner band 12. In the illustrative embodiment, the radially-inner surface 22 is angled relative to the radially-outer surface 24 as shown in Fig. 4.

Each inner-band vane aperture 26 is defined by a side wall 28 that extends between the radially-inner and the radially-outer surfaces 22, 24 of the inner band 12 as shown in Figs. 3 and 4. Each side wall 28 is substantially parallel to an outer surface 52 of the vane 16 received in the inner-band vane aperture 26. In the illustrative embodiment, each side wall 28 is continuous and linear.

In some embodiments, the inner band 12 is made from a metallic material. In the illustrative embodiment, the inner band 12 is made from Inconel. In other embodiments, the inner band 12 is made from stainless steel. In yet other embodiments, the inner band 12 is made from a composite material or other suitable material.

The outer band 14 extends around and along a portion of the central axis 20 as shown in Fig. 1. The outer band 14 includes a radially-inner surface 32, the radially-outer surface 34, and the plurality of outer-band vane apertures 36 as shown in Figs. 3 and 4. The radially-inner surface 32 faces toward the central axis 20. The radially-outer surface 34 faces away from the central axis 20. The plurality of outer-band vane apertures 36 extends through the radially-inner and radially-outer surfaces 32, 34 of the outer band 14. In the illustrative embodiment, the radially-inner surface 32 is generally parallel with the radially-outer surface 34 as shown in Fig. 4.

Each outer-band vane aperture 36 is defined by a side wall 38 that extends between the radially-inner and the radially-outer surfaces 32, 34 of the outer band 14 as shown in Figs. 3 and 4. Each side wall 38 is substantially parallel to the outer surface 52 of the vane 16 received in the outer-band vane aperture 36. In the illustrative embodiment, each side wall 38 is continuous and linear.

In some embodiments, the outer band 14 is made from a metallic material. In the illustrative embodiment, the outer band 14 is made from Inconel. In other embodiments, the outer band 14 is made from stainless steel. In yet other embodiments, the outer band 14 is made from a composite or other suitable material.

The vanes 16 extend between the inner and outer bands 12, 14 as shown in Fig. 2. Each vane 16 extends radially outward through one of the plurality of outer-band vane apertures 36 beyond the radially-outer surface 24 of the outer band 14 as shown in Fig. 4. Each vane 16 extends radially inward through one of the plurality of inner-band vane apertures 26 and is about flush with the radially-inner surface 22 of the inner band 12. In the illustrative embodiment, during a manufacture method, each vane 16 is positioned to extend radially inward through one of the plurality of inner-band vane apertures 26 beyond the radially-inner surface 22 of the inner band 12. Each vane 16 is bonded to the inner band 12 and then machined to be about flush with the radially-inner surface 22.

The vanes 16 are spaced apart from each other circumferentially to form a plurality of vane passageways 62 between each pair of vanes 16 as shown in Fig. 2. The vanes 16 redirect the air received in each vane passageway 62 from the first rotating wheel assembly into the second rotating wheel assembly 132 positioned directly downstream of the vane ring assembly 10.

In the illustrative embodiment, the vanes 16 are solid. In other embodiments, each vane 16 is formed to include a cooling passage through the vane 16. In some embodiments, the vanes 16 are made from a metallic material. In the illustrative embodiment, the vanes 16 are made from Inconel. In other embodiments, the vanes 16 are made from stainless steel. In yet other embodiments, the vanes 16 are made from a composite or other suitable material.

As noted above, each vane 16 includes the body portion 40, the inner attachment portion 42, and the outer attachment portion 44 as shown in Fig. 4. The body portion 40 extends from the radially-outer surface 24 of the inner band 12 to the radially-inner surface 32 of the outer band 14. The inner attachment portion 42 extends radially inward from the body portion 40. The inner attachment portion 42 extends through one of the plurality of inner-band vane apertures 26 and is about flush with the radially-inner surface 22 of the inner band 12. The outer attachment portion 44 extends radially outward from the body portion 40. The outer attachment portion 44 extends through one of the plurality of outer-band vane apertures 36 beyond the radially-outer surface 34 of the outer band 14. The outer attachment portion 44 defines a free end 46 of the vane 16 that extends beyond the outer band 14. The free end 46 is not attached to the outer band 14 by braze, hangers, clips, or other suitable alternatives.

Each vane 16 is bonded to the outer band 14 by the first layer of braze 48 as shown in Figs. 4-6. The first layer of braze 48 is located between the outer attachment portion 44 and the outer band 14 as shown in Fig. 5. Each outer-band vane aperture 36 is sized to receive the outer attachment portion 44 of one of the plurality of vanes 16 to form the first gap 50 therebetween all the way around the vane 16. The first layer of braze 48 is located in the first gap 50 between the side wall 38 and the vane 16 all the way around the vane 16. In some embodiments, the plurality of vanes 16 are tack welded to the inner and outer bands 12, 14 to locate and orient the vanes 16 prior to the application of the first layer of braze 48.

In the illustrative embodiment, the first layer of braze 48 is made from PalNicro 36M. In other embodiments, the braze 48 is made from gold or other suitable material. In other embodiments, the plurality of vanes 16 is coupled to the inner and outer bands 12, 14 by means of other metal-to-metal joining such as, for example, hot upset, weld, or any other suitable alternatives.

Each vane 16 is bonded to the inner band 12 by the second layer of braze 58 as shown in Fig. 4. The second layer of braze 58 is located between the inner attachment portion 42 and the inner band 12. Each inner-band vane aperture 26 is sized to receive the inner attachment portion 42 of one of the plurality of vanes 16 to form the second gap 60 therebetween all the way around the vane 16. The second layer of braze 58 is located in the second gap 60 between the side wall 28 and the vane 16 all the way around the vane 16. In some embodiments, the plurality of vanes 16 are tack welded to the inner and outer bands 12, 14 to locate and orient the vanes 16 prior to the application of the second layer of braze 58.

In the illustrative embodiment, during a manufacturing method, the inner attachment portion 42 of each vane 16 is positioned to extend radially inward through one of the plurality of inner-band vane apertures 26 beyond the radially-inner surface 22 of the inner band 12. The inner attachment portion 42 of each vane 16 is then bonded with the inner band 12 by the second layer of braze 58 and machined to be about flush with the radially-inner surface 22.

In the illustrative embodiment, the second layer of braze 58 is made from PalNicro 36M. In other embodiments, the braze 58 is made from gold or other suitable material. In the other embodiments, the first layer of braze 48 and the second layer of braze are made from different materials. In other embodiments, the plurality of vanes 16 are coupled to the inner and outer bands 12, 14 by means of other metal-to-metal joining such as, for example, hot upset, weld, or any other suitable alternatives.

In illustrative embodiments, the gaps 50, 60 are between about 3 thousandths of an inch and about 25 thousandths of an inch thick. In some embodiments, the gaps 50, 60 are between about 3 thousandths of an inch and about 6 thousandths of an inch thick. In some embodiments, the gaps 50, 60 are between about 6 thousandths of an inch and about 20 thousandths of an inch thick. In some embodiments, the gaps 50, 60 are about 15 thousandths of an inch thick.

The body portion 40 of each vane 16 defines the first radial cross-section 64 and a second radial cross-section 66 as shown in Figs. 7 and 9. The first radial cross-section 64 is located close to the outer band 14 as suggested in Fig. 4 and shown in Fig. 7. The second radial cross-section 66 is located close to the inner band 12 as suggested in Fig. 4 and shown in Fig. 9. The first and second radial cross-sections 64, 66 are airfoil shaped.

The outer attachment portion 44 defines the third radial cross-section 68 as suggested in Fig. 4 and shown in Fig. 8. The third radial cross-section 68 is received in the outer band 14 as shown in Fig. 4. The third radial cross-section 68 is airfoil shaped. The third radial cross-section 68 of the outer attachment portion 44 of each vane 16 is similar to the first radial cross-section 64 of the body portion 40 of the same vane 16 as shown in Figs. 7 and 8.

The inner attachment portion 42 defines a fourth radial cross-section 70 as suggested in Fig. 4 and shown in Fig. 10. The fourth radial cross-section 70 received in the inner band 12 as shown in Fig. 4. The fourth radial cross-section 70 is airfoil shaped. The fourth radial cross-section 70 of the inner attachment portion 42 of each vane 16 is similar to the second radial cross-section 66 of the body portion 40 of the same vane 16 as shown in Figs. 9 and 10.

In the illustrative embodiment, the vane ring segment 15 includes a forward attachment hanger 72 and an aft attachment hanger 74 as shown in Fig. 3. The forward attachment hanger 72 and the aft attachment hanger 74 extend along the outer band 14 to couple the vane ring assembly 10 to the compressor case 128. The forward attachment hanger 72 is coupled to the radially-outer surface 34 of the outer band 14. The forward attachment hanger 72 extends away from the vane 16 and toward a front end of the engine 100. The aft attachment hanger 74 is coupled to the radially-outer surface 34 of the outer band 14. The aft attachment hanger 74 extends away from the vane 16 and toward the aft end of the engine 100.

In the illustrative embodiment, each vane ring assembly 10 is formed from a plurality of circumferentially-extending vane ring segments 15 that defines a full ring as shown in Fig. 1. The plurality of vane ring segments 15 extends circumferentially 360 degrees around the central axis 20 of the gas turbine engine 100.

In the illustrative embodiment, the vane ring assembly 10 is formed from a number of vane ring segments 15 as suggested in Fig. 2. Each of the vane ring segments 15 included in the illustrative embodiment extend circumferentially 45 degrees around the central axis 20. Stresses in the each vane ring segment 15 may vary between ends of the segment 15 relative to a middle portion of the segment 15. The 45 degree vane ring segments 15 may experience lower stresses when compared with 90 degree vane ring segments 15 during operation. However, 90 degree segments may be easier to install in compressor cases depending upon a particular application. In other embodiments, each vane ring segment 15 includes a single vane 16. In other embodiments, each vane ring segment 15 includes a pair of vanes 16.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A vane ring segment (15) for use in a gas turbine engine (100), the vane ring segment (15) comprising
an inner band (12) that extends around a portion of a central axis (20), the inner band (12) including a radially-inner surface (22) facing toward the central axis (20), a radially-outer surface (24) facing away from the central axis (20), and a plurality of inner-band vane apertures (26) extending through the radially-inner and radially-outer surfaces (22, 24) of the inner band (12),
an outer band (14) that extends around a portion of a central axis (20) and that is radially spaced apart from the inner band (12), the outer band (14) including a radially-inner surface (32) facing toward the central axis (20), a radially-outer surface (34) facing away from the central axis (20), and a plurality of outer-band vane apertures (36) extending through the radially-inner and radially-outer surfaces (32, 34) of the outer band (14), and
a plurality of vanes (16) coupled to the inner and outer bands (12, 14), wherein each vane (16) extends radially outward through one of the plurality of outer-band vane apertures (36) beyond the radially-outer surface (34) of the outer band (14) and each vane (16) is bonded to the outer band (14) by a first layer of braze (48).

2. The vane ring segment (15) of claim 1, wherein each vane (16) includes a body portion (40) that extends from the radially-outer surface (24) of the inner band (12) to the radially-inner surface (32) of the outer band (14) and an outer attachment portion (44) that extends radially outward from the body portion (40) through one of the plurality of outer-band vane apertures (36) beyond the radially-outer surface (34) of the outer band (14) and the first layer of braze (48) is located between the outer attachment portion (44) and the outer band (14).

3. The vane ring segment (15) of claim 2, wherein a radial cross-section (68) of the outer attachment portion (44) of each vane (16) has an airfoil shape similar to a radial cross-section (64) of the body portion (40) of the same vane (16) close to the outer band (14).

4. The vane ring segment (15) of one of the preceding claims, wherein each vane (16) extends radially inward through one of the plurality of inner-band vane apertures (26) so that it is about flush with the radially-inner surface (22) of the inner band (12) and each vane (16) is bonded to the inner band (12) by a second layer of braze (58).

5. The vane ring segment (15) of claim 4, wherein each vane (16) includes a body portion (40) that extends from the radially-outer surface (24) of the inner band (12) to the radially-inner surface (32) of the outer band (14) and an inner attachment portion (42) that extends radially inward from the body portion (40) through one of the plurality of inner-band vane apertures (26) so that it is about flush with the radially-inner surface (22) of the inner band (12) and the second layer of braze (58) is located between the inner attachment portion (42) and the inner band (12).

6. The vane ring segment (15) of claim 5, wherein a radial cross-section (70) of the inner attachment portion (42) of each vane (16) has an airfoil shape similar to a radial cross-section (66) of the body portion (40) of the same vane (16) close to the inner band (12).

7. The vane ring segment (15) of one of the preceding claims, wherein each outer-band vane aperture (36) is defined by a side wall (38) that extends between the radially-inner and the radially-outer surfaces (22, 24) of the outer band (14), each outer-band vane aperture (36) is sized to receive the outer attachment portion (44) of one of the plurality of vanes (16) to form a gap (50) therebetween all the way around the vane (16), and the first layer of braze (48) is located in the gap (50) between the side wall (38) and the vane (16) all the way around the vane (16).

8. The vane ring segment (15) of claim 7, wherein each side wall (38) is substantially parallel to an outer surface (52) of a vane (16) received in an outer-band vane aperture (36) defined by the side wall (38).

9. The vane ring segment (15) of claim 7 or 8, wherein the gap (50) is between about 3 thousandths of an inch and about 25 thousandths of an inch thick.

10. The vane ring segment (15) of one of the preceding claims, wherein the inner band (12) is made from a metallic material, the outer band (14) is made from a metallic material, and each of the plurality of vanes (16) is made from a metallic material.

11. A vane ring assembly (10) for use in a gas turbine engine (100), the vane ring assembly (10) comprising
a plurality of vane ring segments (15) of one of the preceding claims extending circumferentially 360 degrees around the central axis (20) of the gas turbine engine (100).

12. The vane ring assembly (10) of claim 11, wherein each of the plurality of vane ring segments (15) extend circumferentially 45 degrees around the central axis (20).

13. The vane ring assembly (10) of claim 11 or 12, wherein each vane (16) includes an inner attachment portion (42) that extends radially inward from the body portion (40) through one of the plurality of inner-band vane apertures (26) so that it is about flush with the radially-inner surface (22) of the inner band (12) and a second layer of braze (58) is located between the inner attachment portion (42) and the inner band (12).

14. The vane ring assembly (10) of claim 13, wherein the first layer of braze (48) is between about 3 thousandths of an inch and about 25 thousandths of an inch thick between the outer attachment portion (44) and the outer band (14) and the second layer of braze (58) is between about 3 thousandths of an inch and about 25 thousandths of an inch thick between the inner attachment portion (42) and the inner band (12).

15. A method of assembling a vane ring segment (15), the method comprising
providing an inner band (12) that extends around a portion of a central axis (20), the inner band (12) including a radially-inner surface (22) facing toward the central axis (20), a radially-outer surface (24) facing away from the central axis (20), an outer band (14) that extends around a portion of a central axis (20) and that is radially spaced apart from the inner band (12), the outer band (14) including a radially-inner surface (32) facing toward the central axis (20), a radially-outer surface (34) facing away from the central axis (20), and a plurality of vanes (16),
forming a plurality of inner-band vane apertures (26) in the inner band (12) and a plurality of outer-band vane apertures (36) in the outer band (14), the inner-band vane apertures (26) extending through the radially-inner and radially-outer surfaces (22, 24) of the inner band (12), and the plurality of outer-band vane apertures (36) extending through the radially-inner and radially-outer surfaces (32, 34) of the outer band (14), and
coupling each of the plurality of vanes (16) to the inner band (12) and the outer band (14) such that each vane (16) extends radially outward through one of the plurality of outer-band vane apertures (36) beyond the radially-outer surface (24) of the outer band (14).
